# FASCICULE DE BREVET EUROPEEN

(11) **EP 0 722 036 B1**
(45) Date de publication et mention de la délivrance du brevet: **18.06.2003**
(21) Numéro de dépôt: 95402922.9
(22) Date de dépôt: 22.12.1995
(51) Int. Cl.: E21B 33/138, E21B 43/22, E21B 43/25, C09K 7/02

(54) **Procédé et fluide à base d'eau utilisant des guars modifiées hydrophobiquement comme réducteur de filtrat**
Verfahren und wässerige Flüssigkeiten, welche hydrophobisch modifizierte Guargummis verwenden zur Verminderung von Flüssigkeitsverlusten
Method and aqueous fluid using hydrophobically modified guar guns as fluid loss reducers

(30) Priorité: 10.01.1995 FR 9500423
(43) Date de publication de la demande: 17.07.1996
(73) Titulaire: INSTITUT FRANCAIS DU PETROLE, 92500 Rueil Malmaison (FR)
(72) Inventeur: Audibert, Annie, F-78290 Croissy sur Seine (FR); Argillier, Jean-François, F-92150 Suresnes (FR)

(56) Documents cités:
- US-A- 3 740 360
- US-A- 4 960 876

## Description

La présente invention concerne des opérations menées dans le but d'exploiter des gisements sousterrains contenant des hydrocarbures. Plus particulièrement, l'invention décrit un procédé pour contrôler les pertes par filtration d'un fluide de forage, de conditionnement ou d'intervention mis en place dans un puits foré dans des formations géologiques.

Les techniques conventionnelles de forage de puits, de conditionnement ou d'intervention dans ces puits comportent la circulation d'un fluide injecté vers le fond du puits par le canal d'un train de tubes composant la garniture de forage ou la garniture de production, le fluide remontant en direction de la surface dans l'annulaire défini par les parois du puits et l'extérieur de la garniture de tubes. Au cours de la remontée, une certaine quantité de fluide pénètre dans les formations géologiques poreuses ou fracturées. Cette quantité perdue de fluide est appelée perte par filtration ou filtrat. Il est généralement souhaitable de limiter la quantité de filtrat car celle-ci représente une consommation coûteuse de produits, des opérations de conditionnements supplémentaires dans l'installation de traitement des boues, et également des risques de déstabilisation des parois du puits ou de colmatage des zones géologiques productrices ou potentiellement productrices.

On connait dans la profession de nombreux produits réducteurs de filtrat pour les fluides à base d'eau, qu'ils soient fluides de forage, fluides de conditionnement communément appelés fluides de "completion" ou fluides d'intervention dans un puits communément appelés fluide de "work over". On peut citer par exemple, l'utilisation de polymères organiques tels amidon ou CMC (carboxyméthylcellulose). On connait par les documents US-4960876 et US-3740360 la description des procédés d'obtention d'un polymère dérivé de gomme guar modifié hydrophobiquement ayant des capacités viscosifiantes ou stabilisantes de suspensions.

Le document US-A 3 740 360 aussi décrit un procédé utilisé dans un puits foré à travers au moins une formation géologique ayant une certaine perméabilité, dans lequel on effectue au moins l'une des opérations suivantes : forage d'un puits, conditionnement d'un puits, intervention dans un puits et adjoint une quantité déterminée d'au moins un dérivé de gomme guar modifiée hydrophobiquement dans un volume de fluide à base d'eau déplacé dans le puits au cours de ladite opération.

Ainsi, la présente invention concerne un procédé utilisé dans un puits foré à travers au moins une formation géologique ayant une certaine perméabilité. On effectue au moins l'une des opérations suivantes : forage d'un puits, conditionnement d'un puits, intervention dans un puits et on contrôle la perméabilité des parois dudit puits foré dans ladite formation par l'adjonction d'une quantité déterminée d'au moins un dérivé de gomme guar modifiée hydrophobiquement (HMG). Le dérivé de gomme guar est de la guar hydroxy propylée modifiée hydrophobiquement (HMPG).

La gomme guar modifiée peut comporter un radical alkyl hydrophobe comportant entre 10 et 32 atomes de carbone, et préférentiellement entre 18 et 28.

La masse moléculaire de la gomme guar modifiée peut être inférieure à 2 000 000 daltons et préférentiellement comprise entre 50 000 et 1 600 000 daltons.

Dans le procédé, le fluide peut comporter entre 0,5 et 30 grammes par litre de gomme guar modifiée hydrophobiquement et préférentiellement entre 1 et 15 g/l.

Le fluide peut comporter au moins un polymère choisi dans le groupe constitué par le xanthane, le scléroglucane, le wellane, le gellane, la cellulose hydroxy éthylée (HEC), la CMC, la gomme de Guar, les polyacrylamides et leurs dérivés anioniques.

L'invention concerne également l'utilisation d'un fluide à base d'eau destiné au forage, au conditionnement d'un puits ou aux interventions dans un puits, comportant une quantité déterminée d'au moins un dérivé de gomme guar modifiée hydrophobiquement, le filtrat de ce fluide étant contrôlé par l'adjonction d'une quantité déterminée d'au moins un dérivé de gomme guar modifiée hydrophobiquement (HMG), le dérivé de gomme guar étant de la guar hydroxy propylée modifiée hydrophobiquement (HMPG).

La viscosité du fluide peut être principalement contrôlée par l'adjonction d'au moins un polymère choisi dans le groupe constitué par le xanthane, le scléroglucane, le wellane, le gellane, la cellulose hydroxy éthylée (HEC), la CMC, la gomme de Guar, les polyacrylamides et leurs dérivés anioniques.

Le fluide peut comporter au moins un électrolyte à des concentrations pouvant atteindre la saturation.

L'électrolyte peut être choisi dans le groupe constitué par le chlorure, le bromure, le carbonate, l'acétate, le formiate, de sodium, de potassium, de calcium, de magnésium et de zinc dans la mesure où ils constituent des sels solubles.

Le fluide peut comporter entre 0,5 et 30 g/l de HMG et entre 0,5 et 20 g/l de polymère viscosifiant.

Le fluide peut comporter entre 0,5 et 10 g/l de HMG, entre 2 et 4 g/l de polymère viscosifiant, préférentiellement du xanthane, entre 10 et 100 g/l de KCl ou de NaCl et entre 0 et 30 g/l d'argile réactive.

Les dérivés de gommes guars modifiés hydrophobiquement découlent principalement des dérivés de gomme guar classiquement utilisés comme la guar hydroxy éthylée ou hydroxy propylée, la guar cationique ou la gomme guar dépolymérisée. Ces dérivés peuvent être modifiés chimiquement par l'incorporation de groupements alkyles par réaction chimique affectant certains motifs glycosidiques. Ces dérivés de gomme guar modifiés hydrophobiquement sont décrits dans le document US-A-4960876.

La gomme guar est un polymère naturel constitué d'unités monomères de D-mannose reliées entre elles par des liaisons β 1-4 pour former la chaîne principale sur laquelle sont branchées des unités de D-Galactose par des liaisons α 1-6. Ce dérivé est fonctionnalisé par réaction d'un époxyalkyle en milieu basique selon le procédé décrit dans le document US-A-4960876 permettant le greffage de 0.01 à 2% de fonctions époxyalkyles de C₂₂ à C₂₈.

La gomme Guar HMG, hydrosoluble peut être préparée à partir d'un dérivé de la gomme guar par incorporation chimique d'une longue chaîne époxyalkyle entre C₁₀ et C₃₂, de préférence entre 18 et 28 atomes de carbone pour le motif hydrophobe.

Le taux de motifs hydrophobes peut varier de 0,01 à environ 5%.

Le polymère HMG peut avoir un taux de substitution molaire de motif hydrophile d'au moins 0,7, de préférence entre 0,7 et 4, entre 0,01 et 2% de substituants hydrophobes par unité anhydroglycosidique, un rapport molaire entre les substituants hydrophiles et hydrophobes compris entre 35/1 et 40000/1. Le motif hydrophile peut être de type hydroxyéthyle, hydroxypropyle, hydroxybutyle, ou un substituant carboxy ou aminé. Le motif hydrophobe peut être de type alkyle, alkylényle linéaire ou branché comprenant de 10 à 32 atomes de carbone.

Le polymère selon l'invention comportant des motifs hydrophiles hydroxypropyle est appelée HMPG.

La demanderesse a mis en évidence que le polymère HMG, défini plus haut, a de bonnes qualités pour contrôler la filtration d'un fluide de forage, de "completion" ou de "work-over", fluides dont la phase liquide continue est aqueuse. Le fluide en circulation ou mis en place par circulation dans le puits peut comporter des produits viscosifiants à base d'argiles réactives et/ou de polymères de nature spécifique pour réaliser notamment la fonction de viscosifiant.

Un fluide de "completion" ou fluide de conditionnement d'un puits, est un fluide déplacé dans un puits pour être mis en place dans un puits de production. Au cours de son déplacement ou de sa mise en place ce fluide est en contact pendant une durée plus ou moins longue avec la formation géologique productrice ou potentiellement productrice. Il en est de même pour un fluide d'intervention ou dit de "workover".

Les caractéristiques physiques et/ou chimiques de ces fluides sont contrôlées et ajustées en fonction de la nature de la formation géologique et des effluents présents, des conditions de fond et des différents rôles que peuvent réaliser de tels fluides, par exemple de nettoyage, de stabilisation, de contrôle des pressions, etc...De plus, ces fluides doivent autant que possible ne pas modifier la productivité de la couche géologique productrice. Aussi, il sera préféré que ces types de fluides contiennent peu ou pas de solides, bien que dans certains cas la présence de solides réactifs ou inertes soit inévitable. Dans tous les cas, le contrôle de la filtration est un paramètre très important.

Les fluides selon la présente invention peuvent également être mis en place ou déplacés dans le puits sous forme de "spacer" ou volume de fluide déplacé par un autre fluide de composition différente, ou intercalé entre deux autres fluides.

Une variante de l'invention concerne les fluides pour les forages dits "slim-hole" (petit diamètre de forage) ou les forages fortement déviés. Ces fluides pour les applications précitées sont préférentiellement déterminés pour posséder les caractéristiques suivantes :
- avoir une viscosité faible aux forts taux de cisaillement, afin de réduire les pertes de charge,
- former un gel au repos pour maintenir les déblais en suspension lors des arrêts de circulation,
- contenir une teneur maximale en solides qui peuvent avoir tendance à former des dépots ou des amalgames notamment sous l'action de la centrifugation provoquée par la rotation du train de tiges dans un trou de faible diamètre relativement à la dimension du train de tiges, ou sous l'action de la gravité dans le cas des puits horizontaux. Or, sans solide ou avec très peu de solides par rapport aux forages conventionnels, il est connu que le contrôle de la filtration est très délicat.

Donc, les fluides en circulation dans de telles conditions particulières ne comportent généralement pratiquement pas de colloïdes argileux réactifs comme viscosifiant de base mais des polymères spécifiques. Il est connu que ces fluides dits "sans solide" ou "sans apport de solide" présentent des difficultés pour avoir de bonnes caractéristiques de filtration, particulièrement aux moyennes ou hautes températures, avec les produits conventionnels de réduction du filtrat. Par contre, la HMG utilisée selon la présente invention révèle de bonne capacité pour contrôler la filtration, en particulier en combinaison avec certains des polymères viscosifiants et ce d'autant que la température augmente. Ceci n'est généralement pas le cas pour les dérivés de polymères naturels classiquement utilisés comme réducteur de filtrat dans les formulations de fluides de forage ou de complétion.

Les essais suivants vont mettre en évidence les caractéristiques du HMG dans diverses conditions d'utilisations et selon des procédures de tests conventionnels. Le polymère testé est du HMPG, produit actuellement disponible sur le marché pour des applications différentes, notamment papier, peinture... et dont la masse moléculaire est estimée entre 50 000 et 1 600 000. Les tests de filtration ont été exécutés selon les normes API (American Petroleum Institute) en vigueur: API RP23 B1 section 3- Filtration-Juin 1990. Les filtrats sont donnés en millilitre (ml), la viscosité plastique VP en mPa.s, la contrainte seuil YV (Yield Value) en lb/100ft² (on multipliera par 0,4788 pour obtenir YV en Pa) et l'épaisseur du cake en millimètre.

Différentes formulations de fluides ont été testées, avec ou sans ajout d'alourdissants de type barytine, le viscosifiant est en général un polysaccharide du type xanthane ou scléroglucane.

Les formulations selon l'invention ont été comparées à des formulations classiques contenant des réducteurs de filtrat connus dans la profession, tels la CMC (carboxy méthyl cellulose) basse viscosité qui peut être actuellement considérée comme un des meilleurs produits disponibles avec, pour certaines applications, la HEC (cellulose hydroxy éthylée), le PAC (cellulose polyanionique) de masse moléculaire plus élevée que celle de la CMC, la gomme guar, produit précurseur de la gomme guar modifiée hydrophobiquement.

### Essai 1 :

### Comparaison de l'efficacité du HMPG avec des réducteurs de filtrat classiques, pour différentes densités de fluides

Conditions : Standard API, température ambiante (25°C).
Formulation de base FB : Xanthane 2 g/l, KCl 50 g/l
d=1,03- barytine 30 g/l

| **Additif à FB** | **Filtrat 30 min** | **VP** | **YV** | **Cake** |
|---|---|---|---|---|
| **CMC basse vis. 10 g/l** | 10 | 8 | 5 | <1 |
| **Guar 2 g/l** | 11.4 | 7 | 6 | 0.5 |
| **HMPG 2 g/l** | 14.8 | 6 | 7 | <1 |
| **HMPG 4 g/l** | 12.3 | 11 | 14 | <1 |

d=1.2- barytine 210 g/l

| **Additif à FB** | **Filtrat 30 min** | **VP** | **YV** | **Cake** |
|---|---|---|---|---|
| **CMC basse vis. 10 g/l** | 5.8 | 14 | 3 | <1 |
| **HMPG 2 g/l** | 10.6 | 7 | 9 | <1 |

Le xanthane de marque IDVIS, la CMC basse viscosité, utilisés sont respectivement commercialisés par les sociétés DOWELL-IDF et Aqualon.

### Remarques :

Pour la formulation de faible densité, les caractéristiques de filtration en présence de HMPG sont du même ordre de grandeur que celles de la CMC Basse viscosité qui est actuellement considérée comme un des meilleurs produits disponibles.
L'ajout de barytine à la formulation étudiée précédemment permet d'augmenter la densité du fluide à 1,2. Le filtrat 30' est alors faible (∼10 ml). Comparativement, une formulation à base de CMC donne également un filtrat faible (∼ 6 ml) mais avec une forte viscosité plastique (14).

### Essai 2 :

### Influence de la température pour différentes densités de fluides

Conditions : Standard API, dans une cellule de test HP/HT avec une pression de 35 bar et une contre-pression de 15 bar.
Formulation de base FB : Xanthane 2 g/l, KCl 50 g/l,

| **a) Température de filtration: 90°C et d=1.03 (barytine 30 g/l)** | | |
|---|---|---|
| **Additif à FB** | **Filtrat 30 min** | **Cake** |
| **CMC basse vis. 10 g/l** | 19.4 | ∼ 1.5 |
| **Guar 2 g/l** | 51.5 | <2 |
| **HMPG 2 g/l** | 44.8 | 1.5 |

| **b) Température de filtration 120°C et d=1.03 (barytine 30 g/l)** | | |
|---|---|---|
| **Additif à FB** | **Filtrat 30 min** | **Cake** |
| **CMC basse vis. 10 g/l** | >250 | - |
| **Guar 2 g/l** | 124.5 | <2 |
| **HMPG 2 g/l** | 69.8 | - 1.5 |

La formulation contenant la CMC basse viscosité est dégradée lors de la période de chauffage précédant la filtration en température (environ 2 heures) et l'on observe aucune formation de cake dans ces conditions.

| **c) Température de filtration 90°C et d=1.2 (barytine 210 g/l)** | | |
|---|---|---|
| **Additif à FB** | **Filtrat 30 min** | **Cake** |
| **CMC basse vis. 10 g/l** | 20.6 | pas de tenue |
| **HMPG 2 g/l** | 22.7 | ∼ 8 |

| **d) Température de filtration 120°C et d=1.2 (barytine 210 g/l)** | | |
|---|---|---|
| **Additif à FB** | **Filtrat 30 min** | **Cake** |
| **CMC basse vis. 10 g/l** | ∞ | - |
| **HMPG 2 g/l** | 28.8 | <9 |

### Remarques :

L'augmentation de la température entraine généralement un renforcement des interactions hydrophobes. Sous l'effet de la température, on observe une meilleure réduction du filtrat de la HMPG. On notera qu'à 120°C, un des meilleurs réducteurs de filtrat actuellement proposés est alors dégradé sous l'effet de la température. De plus, à 90°C, la qualité du cake formé est très mauvaise et le cake ne présente aucune tenue mécanique. Ceci est confirmé par l'essai 3.

### Essai 3 :

### Influence du vieillissement en température (120°C)

Conditions : Dans une cellule de test HP/HT avec une pression de 35 bar et une contre-pression de 15 bar, mais après un vieillissement de 16 heures à une température de 120°C.
Formulation de base FB : Xanthane 2 g/l, KCl 50 g/l

| **Température de filtration 120°C et d=1.03 (barytine 30 g/l)** | | | | |
|---|---|---|---|---|
| **Additif à FB** | **Filtrat 30 min** | **VP** | **YV** | **Cake** |
| **CMC basse vis. 10 g/l** | ∞ | 8 | 5 | |
| **HMPG 2 g/l** | 69.8 | 6 | 7 | ∼1.5 |
| **HMPG 2 g/l** (*) | 71.6 | 6 | 6 | ∼2 |

| | | | | |
|---|---|---|---|---|
| (*) **après vieillissement** | | | | |

### Remarques :

Les valeurs de viscosité plastique et yield value indiquées dans le tableau précédent correspondent aux caractéristiques des formulations avant filtration, qui sont semblables pour les trois formulations.

On observe ainsi un maintien des propriétés de la formulation à base de HMPG même après vieillissement, aussi bien en terme de filtration que de propriétés rhéologiques.

### Essai 4 :

### Formulations avec solides

Conditions : Standard API, température de 30°C.
Formulation de base FB : Argile Green Bond 30 g/l, NaCl 10 g/l

| **Additif à FB** | **Filtrat 30 min** | **VP** | **YV** | **Cake** |
|---|---|---|---|---|
| **1) sans additif** | 36.5 | 9.5 | - | 2.8 |
| **2) CMC 3 g/l** | 13 | | | 1.5 |
| **3) Xanthane 2 g/l et HMPG 2 g/l** | 11.8 | 25 | 39 | 2.5 |

### Remarques :

Une certaine quantité d'argile peut être utilisée en association, par exemple avec du xanthane. Le niveau de filtrat obtenu reste faible.

Les différents essais de la présente description confirment que les formulations de fluide adaptées au forage, au conditionnement de puits ou d'intervention, contenant préférentiellement un polymère viscosifiant en solution aqueuse, éventuellement des particules solides réactives et/ou inertes, peuvent avoir une bonne caractéristique de filtration en utilisant une quantité efficace de HMG comme réducteur de filtrat. On sait que les polymères réducteurs de filtrat, telles la CMC ou la HEC, dispersent et homogénéisent la suspension par adsorption sur les particules solides, les rendant ainsi plus négatives et donc plus répulsives. Il se forme ensuite par filtration de cette suspension homogène un cake ayant une structure assez régulière et par conséquent relativement imperméable. De plus, la perméabilité du cake peut être encore diminuée par du polymère libre qui gélifie dans les pores du cake.

Le polymère HMG joue notamment un tel rôle ou un rôle équivalent. Mais la structure particulière de la HMG, et par exemple de la HMPG, de la présente invention est aussi susceptible de former une structure tridimensionnelle ordonnée sans nécessiter, pour former un cake de faible perméabilité, d'avoir un support de particules solides comme de l'argile ou de la baryte. De plus, la stabilité en température de la structure de la HMG permet son application dans les domaines d'intérêt de la profession, en particulier dans les puits hautes températures. Les avantages et les fonctions de la HMG se retrouvent dans les polymères de cette classe pour des masses moléculaires inférieures à environ 2000000 daltons.

Dans le cadre d'applications spécifiques dans lesquelles les fluides ne contiennent pratiquement pas de solides réactif, par exemple les applications "slim hole" ou forage dévié, fluides de "completion" ou de "workover", l'association du HMG comme réducteur de filtrat associé à un polymère viscosifiant, par exemple le xanthane, donne aux fluides de bonnes caractéristiques de filtration même à des hautes températures.

## Revendications

1. Procédé utilisé dans un puits foré à travers au moins une formation géologique ayant une certaine perméabilité, dans lequel l'on effectue au moins l'une des opérations suivantes : forage d'un puits, conditionnement d'un puits, intervention dans un puits, et on contrôle la perméabilité des parois dudit puits foré dans ladite formation par l'adjonction d'une quantité déterminée d'au moins un dérivé de gomme guar modifiée hydrophobiquement (HMG) dans un volume de fluide à base d'eau déplacé dans le puits au cours de ladite opération, ledit dérivé étant modifié chimiquement par l'incorporation de groupements alkyles.

2. Procédé selon la revendication 1, **caractérisé en ce que** ledit dérivé de gomme guar est choisi parmi le groupe constitué par de la guar modifiée hydrophobiquement, à motif hydrophile de type hydroxy éthyle, hydroxy propyle, hydroxy butyle, un substituant carboxy et un substituant aminé, et leur mélange.

3. Procédé selon l'une des revendications précédentes, **caractérisé en ce que** la gomme guar modifiée comporte un radical alkyl hydrophobe comportant entre 10 et 32 atomes de carbone, et préférentiellement entre 18 et 28.

4. Procédé selon l'une des revendications précédentes, **caractérisé en ce que** la masse moléculaire de la gomme guar modifiée hydrophobiquement est inférieure à 2000000 daltons et préférentiellement comprise entre 50000 et 1600000 daltons.

5. Procédé selon l'une des revendications 1 à 4, **caractérisé en ce que** ledit fluide comporte entre 0,5 et 30 grammes par litre de gomme guar modifiée hydrophobiquement et préférentiellement entre 1 et 15 g/l.

6. Procédé selon l'une des revendications 1 à 5, **caractérisé en ce que** ledit fluide comporte au moins un polymère choisi dans le groupe constitué par le xanthane, le scléroglucane, le wellane, le gellane, la cellulose hydroxy éthylée (HEC), la CMC, la gomme de Guar, les polyacrylamides et les dérivés anioniques des polyacrylamides.

7. Utilisation d'un fluide à base d'eau destiné au forage, au conditionnement d'un puits ou aux interventions dans un puits, dans laquelle son filtrat est contrôlé par l'adjonction d'une quantité déterminée de dérivé de gomme guar modifiée hydrophobiquement (HMG), ledit dérivé étant modifié chimiquement par l'incorporation de groupements alkyles.

8. Utilisation selon la revendication 7, **caractérisé en ce que** ledit dérivé de gomme guar est de la guar hydroxy propylée modifiée hydrophobiquement (HMPG).

9. Utilisation selon l'une des revendications 7 ou 8, **caractérisé en ce que** la viscosité du fluide est principalement contrôlée par l'adjonction d'au moins un polymère choisi dans le groupe constitué par le xanthane, le scléroglucane, le gellane, le wellane, la cellulose hydroxy éthylée (HEC), la CMC, la gomme de Guar, les polyacrylamides et les dérivés anioniques des polyacrylamides.

10. Utilisation selon l'une des revendications 7 à 9, **caractérisé en ce que** le fluide comporte au moins un électrolyte à des concentrations pouvant atteindre la saturation.

11. Utilisation selon la revendication 10, **caractérisé en ce que** ledit électrolyte est choisi dans le groupe constitué par le chlorure, le bromure, le carbonate, l'acétate, le formiate, de sodium, de potassium, de calcium, de magnesium et de zinc dans la mesure où ils constituent des sels solubles.

12. Utilisation selon l'une des revendications 7 à 11, **caractérisé en ce que** le fluide comporte entre 0,5 et 30 g/l de HMG et entre 0,5 et 20 g/l de polymère viscosifiant.

13. Utilisation selon l'une des revendications 7 à 12, **caractérisé en ce que** le fluide comporte entre 0,5 et 10 g/l de HMG, entre 2 et 4 g/l de polymère viscosifiant, préférentiellement du xanthane, entre 10 et 100 g/l de KCl ou de NaCl et entre 0 et 30 g/l d'argile réactive.

## Patentansprüche

1. Verfahren, verwendet in einem, durch wenigstens eine geologische Formation mit einer gewissen Durchlässigkeit, gebohrten Bohrloch, bei dem man wenigstens einen der folgenden Arbeitsschritte durchführt: Bohren eines Bohrloches, Konditionieren eines Bohrloches, Eingriffnahme in ein Bohrloch und bei dem man die Durchlässigkeit der Wandungen des gebohrten Bohrloches durch die Formation mittels Zuweisung einer festgelegten Menge von wenigstens einem hydrophobisch modifizierten Derivat von Guar-Gummi (HMG), in einem Volumen eines auf dem Wasser basierenden Fluids kontrolliert, welches aus dem Bohrloch im Verlauf des genannten Arbeitsschritts verdrängt wird, wobei die Derivate durch Aufnahme von Alkylgruppen chemisch modifiziert sind.

2. Verfahren nach Anspruch 1, **dadurch gekennzeichnet, dass** das Guar-Gummi Derivat aus der Gruppe der mit hydrophilen Grundeinheiten des Typs Hydroxiethyl-, Hydroxipropyl-, Hydroxibutyl-, Carboxy-Substituenten, aminierten Substituenten und deren Mischung, hydrophobisch modifizierten Guare ausgewählt ist.

3. Verfahren nach einem der vorherigen Ansprüche, **dadurch gekennzeichnet, dass** der modifizierte Guar-Gummi ein hydrophobes Alkylradikal umfasst, das zwischen 10 und 32 Kohlenstoffatomen umfasst, vorzugsweise zwischen 18 und 28.

4. Verfahren nach einem der vorherigen Ansprüche, **dadurch gekennzeichnet, dass** die Molekularmasse des hydrophobisch modifizierten Guar-Gummis kleiner als 2.000.000 Daltons beträgt, vorzugsweise zwischen 50.000 und 1.600.000 Daltons.

5. Verfahren nach einem der Ansprüche 1 bis 4, **dadurch gekennzeichnet, dass** das genannte Fluid zwischen 0,5 und 30 Gramm pro Liter hydrophobisch modifiziertes Guar-Gummi enthält, vorzugsweise zwischen 1 und 15 g/l.

6. Verfahren nach einem der Ansprüche 1 bis 5, **dadurch gekennzeichnet, dass** das genannte Fluid zumindest ein Polymer aus der Gruppe umfasst, die gebildet wird aus Xanthan, Skleroglukan, Wellan, Gellan, Hydroxyehtylcellulose (HEC), CMC, Guar-Gummi, Polyacrylamide und den anionischen Derivaten des Polyacrylamids.

7. Verwendung eines wasserbasierten Fluids zur Bohrung, zur Konditionierung eines Bohrloches oder zur Eingriffnahme in ein Bohrloch, bei dem dessen Filtrat durch die Zuweisung einer festgelegten Menge eines modifizierten hydrophobischen Derivats (HMG) geregelt ist, wobei besagtes Derivat durch Aufnahme von Alkylgruppen chemisch modifiziert ist.

8. Verwendung gemäß Anspruch 7, **dadurch gekennzeichnet, dass** das Guar-Gummi Derivat hydrophobisch modifiziertes Hydroxypropyl-Guar (HMPG) ist.

9. Verwendung gemäß einem der Ansprüche 7 oder 8, **dadurch gekennzeichnet, dass** die Viskosität des Fluids grundsätzlich durch die Zuweisung von wenigstens einem Polymer aus der Gruppe Xanthan, Skleroglukan, Gellan, Wellan, Ethylhydroxycellulose (HEC), CMC, Guar-Gummi, Polyacrylamid und anionische Derivate des Polyacrylamids, festgelegt wird.

10. Verwendung gemäß einem der Ansprüche 7 bis 9, **dadurch gekennzeichnet, dass** das Fluid wenigstens einen Elektrolyten in einer sättigungsnahen Konzentration enthält.

11. Verwendung gemäß Anspruch 10, **dadurch gekennzeichnet, dass** der Elektrolyt aus der Gruppe der Chloride, Bromide, Carbonate, Acetate, Formiate des Natriums, Kaliums, Calciums, Magnesiums und des Zinks in dem Maße, wo sie lösliche Salze bilden, ausgesucht wird.

12. Verwendung gemäß einem der Ansprüche 7 bis 11, **dadurch gekennzeichnet, dass** das Fluid zwischen 0,5 und 30 g/l HMG und zwischen 0,5 und 20 g/l viskosmachendes Polymer enthält.

13. Verwendung gemäß einem der Ansprüche 7 bis 12, **dadurch gekennzeichnet, dass** das Fluid zwischen 0,5 und 10 g/l HMG, zwischen 2 und 4 g/l viskosmachendes Polymer, vorzugsweise Xanthan, zwischen 10 und 100 g/l KCI oder NaCI und zwischen 0 und 30 g/l reaktiven Ton enthält.

## Claims

1. A process used in a well drilled through at least one geologic formation having a certain permeability, in which at least one of the following operations is performed: well drilling, well completion, well workover, and the permeability of the walls of said well drilled in said formation is controlled by adding a predetermined amount of at least one hydrophobically modified guar gum derivative (HMG) to a volume of water-base fluid displaced in the well during said operation, said derivative being modified by incorporation of alkyl-containing groups.

2. A process as claimed in claim 1, **characterised in that** said guar gum derivative is selected from the group consisting of hydrophobically modified guar, with a hydrophilic unit of the hydroxyethyl, hydroxypropyl, hydroxybutyl type, a carboxy substituent and an amine substituent, and their mixture.

3. A process as claimed in any one of the previous claims, **characterised in that** the modified guar gum contains a hydrophobic alkyl radical having between 10 and 32 atoms of carbon, and preferably between 18 and 28.

4. A process as claimed in any one of the previous claims **characterised in that** the molecular mass of the hydrophobically modified guar gum is less than 2,000,000 daltons and preferably ranges between 50,000 and 1,600,000 daltons.

5. A process as claimed in any one of claims 1 to 4, **characterised in that** said fluid contains between 0.5 and 30 grams per litre of hydrophobically modified guar gum and preferably between 1 and 15 g/l.

6. A process as claimed in any one of claims 1 to 5, **characterised in that** said fluid contains at least one polymer selected from the group consisting of xanthan, scleroglucan, wellan, gellan, hydroxyethylcellulose (HEC), CMC, guar gum, the polyacrylamides and the anionic derivatives of the polyacrylamides.

7. Use of a water-base fluid intended for drilling, well completion or well workover, in which its filtrate is controlled by adding a predetermined amount of hydrophobically modified guar gum derivative (HMG).

8. Use according to claim 7, **characterised in that** said guar gum derivative is hydrophobically modified hydroxypropyl guar (HMPG).

9. Use according to claim 7 or 8, **characterised in that** the viscosity of the fluid is mainly controlled by adding at least one polymer selected from the group consisting of xanthan, scleroglucan, gellan, wellan, hydroxyethylcellulose (HEC), CMC, guar gum, the polyacrylamides and the anionic derivatives of the polyacrylamides.

10. Use according to any one of claims 7 to 9, **characterised in that** the fluid includes at least one electrolyte at concentrations that can reach saturation.

11. Use according to claim 10, **characterised in that** said electrolyte is selected from the group consisting of sodium, potassium, calcium, magnesium and zinc chloride, bromide, carbonate, acetate, formate, insofar as they constitute soluble salts.

12. Use according to any one of claims 7 to 11, **characterised in that** the fluid includes between 0.5 and 30 g/l of HMG and between 0.5 and 20 g/l of viscosifying polymer.

13. Use according to any one of claims 7 to 12, **characterised in that** the fluid includes between 0.5 and 10 g/l of HMG, between 2 and 4 g/l of viscosifying polymer, preferably xanthan, between 10 and 100 g/l of KCl or NaCl and between 0 and 30 g/l of reactive clay.
